Europäisches Patentamt

European Patent Office

Office européen des brevets

(19)

(11) **EP 1 422 848 A2**

## (12) EUROPEAN PATENT APPLICATION

(43) Date of publication:
   **26.05.2004 Bulletin 2004/22**

(51) Int Cl.[7]: **H04B 17/00**

(21) Application number: **03257246.3**

(22) Date of filing: **18.11.2003**

(84) Designated Contracting States:
   **AT BE BG CH CY CZ DE DK EE ES FI FR GB GR
   HU IE IT LI LU MC NL PT RO SE SI SK TR**
   Designated Extension States:
   **AL LT LV MK**

(30) Priority: **19.11.2002 GB 0226992**

(72) Inventor: **Ma, Ming**
   **Newbury Berkshire RG14 5LA (GB)**

(74) Representative: **Dawson, Elizabeth Ann et al**
   **A.A. Thornton & Co.**
   **235 High Holborn**
   **London WC1V 7LE (GB)**

(71) Applicant: **Matsushita Electric Industrial Co., Ltd.
   Kadoma-shi, Osaka-fu, 571-8501 (JP)**

### (54) Frequency burst SNR estimation

(57)   A method of estimating signal to noise ratio (SNR) in a frequency burst (FB) signal received over a communications channel comprises

   (a) estimating the signal power of the FB by searching for the maximum absolute correlation value in the received FB signal,
   (b) calculating the FB burst energy as the sum of received signal power and noise power corresponding to the maximum absolute correlation value,
   (c) estimating noise power of FB by subtracting the estimated signal power calculated in step (a) from the burst energy calculated in step (b), and
   (d) estimating required SNR using estimated signal power from step (a) and estimated noise power from step (d).

**Figure 1**. Diagram of FB SNR estimation

**Description**

The present invention relates to a method and apparatus for estimating frequency burst (FB) signal to noise ratio (SNR) in a received digital signal. Particularly, the present invention presents such a method and apparatus to be used in time division multiple access (TDMA) based mobile telecommunication system such as GSM systems.

It is well known that accurate reception and transmission of data in mobile telephone systems depends on proper synchronisation of mobile stations with base stations. One method of enabling such synchronisation to be achieved involves broadcasting frequency bursts (FB) on a so-called broadcast common channel. A frequency burst consists of 3 tail bits, 142 fixed data bits with state "0", 3 further tail bits and 8.25 guard bits. The 142 fixed data bits with state "0" correspond to an unmodulated carrier 67.7 kHz above the normal carrier frequency in a TDMA (time division multiple access) time slot if the mobile terminal is synchronised in frequency with the base station. However, before this frequency synchronisation has taken place, the received FB frequency will be in the range of 67.7kHz $\pm$ 11.5kHz for the GSM system in 900MHz band or in the range of 67.7 $\pm$ 23kHz for the GSM system in 1800MHz band due to the inaccuracy of the mobile terminal reference oscillator, which is about $\pm$ 12ppm. The carrier 67.7 kHz is equal $F_s/4$, where $F_s$ is the sampling frequency, 270,833 Hz. The principles of the FB detection algorithm are discussed in detail in GB-A-2315198.

When a FB is detected, the FB detector provides frequency error estimation for layer 1 frequency tracking in order to adjust mobile station carrier frequency to match accuracy of GSM 05.10 standard. It is also necessary to obtain a confidence information as SNR of FB detection and frequency error estimation in order to further improve frequency-tracking function performed by layer 1 software.

A method and apparatus for estimating signal and noise power based on channel impulse response (CIR) taps is described in document US 2002/0110199. However, at FB detection stage, no channel estimation has been performed, thus no CIR taps can be used to estimate signal power.

Consequently, it is an object of this present invention to provide a method and apparatus to perform FB SNR estimation.

The invention provides a method of SNR estimation as defined in claim 1 and apparatus for carrying out the method as defined in claim 6. Preferred features of the invention are described in the subsidiary claims.

An embodiment of the invention will now be described by way of example only and with reference to the accompanying drawings in which:

Figure 1 is a flow diagram of an algorithm for SNR estimation according to the invention; and
Figure 2 is a chart showing results of SNR estimation achieved using the method to be described.

At FB detection stage, after the reception of complex signal samples r(n), a windowed complex correlation is computed according to:

$$Corr[k] = \sum_{j=1}^{j=N} r(j+k+M) \times r(j+k)^* \qquad (1)$$

where the asterisk denotes complex conjugation, $k$ is the index of correlation calculation, $N$ is the correlation computing window length, equal to *142* and $M$ is the de-correlation parameter, equal to *6*. The received signal $r(n)$ can be written as follows:

$$r(n) = s(n) + \eta(n) \qquad (2)$$

where $s(n)$ is the complex GMSK modulated signal, $\eta(n)$ is a complex additive white gaussian noise (AWGN) process, which has zero-mean and variance $\sigma_n^2 = \frac{N_0}{2}$. By substituting (2) into (1), the complex correlation can be rewritten as follows:

$$Corr[k] = \sum_{j=1}^{j=N} [s(j+k+M) + \eta(j+k+M)] \times [s(j+k)^* + \eta(j+k)^*]$$

$$= \sum_{j=1}^{j=N} s(j+k+M)s(j+k)^* + \sum_{j=1}^{j=N} s(j+k+M)\eta(j+k)^* +$$

$$\sum_{j=1}^{j=N} s(j+k)^* \eta(j+k+M) + \sum_{j=1}^{j=N} \eta(j+k+M)\eta(j+k)^* \qquad (3)$$

Assume index $l$ $(k = l)$ corresponds to the maximum correlation value with *142* zeroes of the FB totally within the correlation-computing window after a FB is detected. Index $l$ will correspond to the first bit of the frequency burst. Since *s(n)* is deterministic when the FB is detected, $\eta$*(j)* and $\eta$*(k)* are approximately uncorrelated when $|j - k| = M$, which equals *6* in our implementation, the following equation can be obtained:

$$E[s(j) \times \eta(k)^*] \approx s(j) \times E[\eta(k)^*] = 0,$$
$$E(s(j)^* \times \eta(k)] \approx s(j)^* \times E[\eta(k)] = 0, \qquad (4)$$
$$E[\eta(j)^* \times \eta(k)] \approx E[\eta(j)^*] \times E[\eta(k)] = 0,$$

where E( ) denotes expectation (statistical averaging). Equation (3) can be approximated to the following for large N:

$$Corr[l] = Corr[k]_{max} \approx \sum_{j=1}^{j=N} s(j+k+M)s(j+k)^*$$

$$\approx \sum_{j=1}^{j=N} (i)^M s(j+k)s(j+k)^* \qquad (5)$$

where $i = \sqrt{-1}$, and the maximum absolute correlation value is approximately equal to FB signal power:

$$Estimated\_signal\_power = |Corr(k)_{max}| \approx \sum_{j=1}^{j=N} |s(j+k)|^2 \qquad (6)$$

The FB burst energy consists of received signal power and noise power:

$$Burst\_energy[l] = \sum_{j=1}^{j=N} r(j+l)r(j+l)^* = \sum_{j=1}^{j=N} |s(j+l)|^2 + \sum_{j=1}^{j=N} |\eta(j+l)|^2$$

$$\qquad\qquad\qquad\qquad\qquad\qquad\qquad\qquad\qquad (7)$$

$$= recieved\_signal\_power + Noise\_power$$

where $l$ is an index corresponding to maximum absolute correlation value when a FB is detected.

Based on equation (6) and (7), the noise power can be obtained as follows:

$$Noise\_power \approx Burst\_energy[l] - |Corr(k)_{max}| \qquad (8)$$

SNR can be approximately obtained based on equation (6) and (8) as follows:

$$SNR \approx \frac{Estimated\_signal\_power}{Noise\_power} \approx \frac{|Corr(k)|_{max}}{Burst\_energy[l] - |Corr(k)|_{max}} \qquad (9)$$

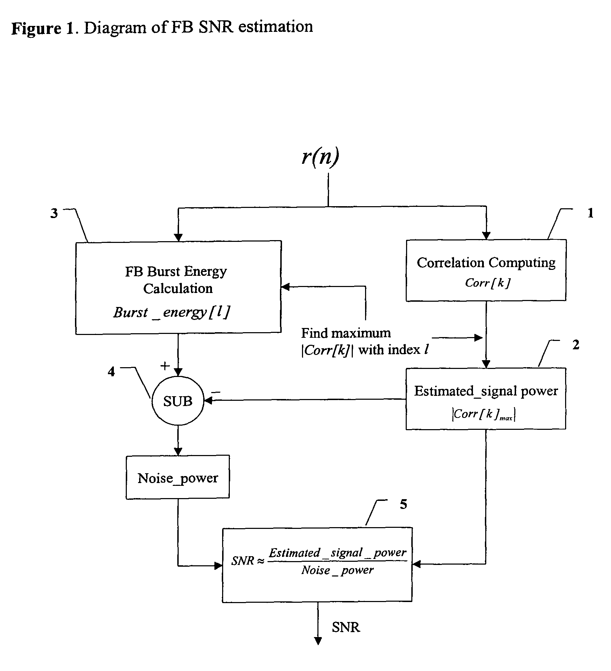

The corresponding apparatus based on the above-mentioned method will be explained in detail with reference to Figure 1 as follows:

Received signal samples r(n) are input into the apparatus that forms part of FB detector. A windowed complex correlation is computed according to equation (1) with de-correlation parameter $M$ is introduced in processing unit **1**. When a FB is detected, find maximum absolute correlation value with index $l$. According to equation (6), this maximum absolute correlation value can be approximated as estimated signal power in processing unit 2 following the approximation method introduced in equations (3), (4) and (5). At same time, FB burst energy as the sum of received signal power and noise power can be obtained according to equation (7) for index $l$ in processing unit **3**. Noise power will be calculated in processing unit **4** by subtracting estimated signal power from burst energy. Finally, SNR can be computed when estimated signal and noise power is available in processing unit **5** according to equation (9).

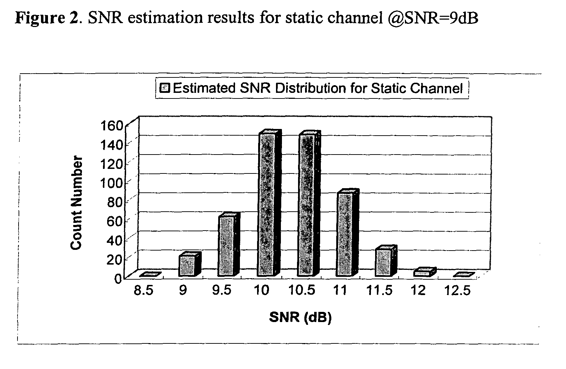

The simulation result by this method for GMSK static channel model is shown in Figure 2, in which 500 FB SNR estimations are performed at nominal 9dB SNR. The average of 500 SNR estimations is about 10.1dB with standard deviation 0.61dB.

**Claims**

1. A method of estimating signal to noise ratio (SNR) in a frequency burst (FB) signal received over a communications channel, the method comprising:

   (a) estimating the signal power of the FB by searching for the maximum absolute correlation value in the received FB signal,
   (b) calculating the FB burst energy as the sum of received signal power and noise power corresponding to the maximum absolute correlation value,
   (c) estimating noise power of FB by subtracting the estimated signal power calculated in step (a) from the burst energy calculated in step (b), and
   (d) estimating required SNR using estimated signal power from step (a) and estimated noise power from step (d).

2. A method as claimed in claim 1, in which the signal power of the FB is estimated in step (a) according to following:

$$Estimated\_signal\_power = |Corr(k)_{max}| \approx \sum_{j=1}^{j=N} |s(j+k)|^2$$

where $k$ is the index of correlation and $N$ is the correlation computing window length, and s( ) represents a received complex signal.

3. A method as claimed in claim 1 or 2, in which the summation of received signal power and noise power in step (b) is calculated in accordance with the expression:

$$Burst\_energy[l] = \sum_{j=1}^{j=N} r(j+l)r(j+l)^* = \sum_{j=1}^{j=N} |s(j+l)|^2 + \sum_{j=1}^{j=N} |\eta(j+l)|^2$$

$$= recieved\_signal\_power + Noise\_power$$

in which index $l$ corresponds to the maximum absolute correlation value and $\eta(n)$ is a function representing noise.

4. A method as claimed in any preceding claim, in which the noise power of the FB in step (b) is computed according to the expression:

$$Noise\_power \approx Burst\_energy[l] - |Corr(k)_{max}|$$

in which index $l$ corresponds to the maximum absolute correlation value and $\eta(n)$ is a function representing noise.

5. A method according to any preceding claim 1, in which the SNR of the FB is estimated according to the following expression:

$$SNR \approx \frac{Estimated\_signal\_power}{Noise\_power} \approx \frac{|Corr(k)|_{max}}{Burst\_energy[l] - |Corr(k)|_{max}}$$

in which index $l$ corresponds to the maximum absolute correlation value.

6. Apparatus for carrying out a method as claimed in any preceding claim comprising:

a complex correlation computing unit having an input for received signals,
a complex correlation computing unit receiving output from the complex correlation computing unit and arranged to search for the maximum complex correlation value as estimated signal power,
an adder arranged to perform step (b),
a subtractor arranged to perform step(c), and
a division unit arranged to perform step (d).

**Figure 1**. Diagram of FB SNR estimation

**Figure 2**. SNR estimation results for static channel @SNR=9dB